(19)

**Europäisches Patentamt**

**European Patent Office**

**Office européen des brevets**

(11) **EP 4 629 177 A1**

(12) **EUROPEAN PATENT APPLICATION**

(43) Date of publication:
08.10.2025 Bulletin 2025/41

(21) Application number: 24168226.9

(22) Date of filing: 03.04.2024

(51) International Patent Classification (IPC):
*G06T 11/20* (2006.01)     *G06T 7/00* (2017.01)

(52) Cooperative Patent Classification (CPC):
**G06T 11/206; G06T 7/0012;** G06T 2207/10076;
G06T 2207/10081; G06T 2207/20101;
G06T 2207/20108; G06T 2207/30048;
G06T 2207/30101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Pie Medical Imaging BV**
**6227 AJ Maastricht (NL)**

(72) Inventors:
• **Aben, Jean-Paul**
**6141 AB Limbricht (NL)**
• **Schormans, Ron**
**6147 CP Heerlen (NL)**
• **Punt, Mark**
**6218 GZ Maastricht (NL)**
• **van den Bosch, Piet**
**5712 XV Someren (NL)**

(74) Representative: **Bessi, Lorenzo**
**Esaote S.p.A.**
**Via di Caciolle, 15**
**50127 Firenze (IT)**

(54) **METHOD AND SYSTEM FOR UTILIZING VOLUMETRIC IMAGE DATA TO SUPPORT CORONARY INTERVENTIONS**

(57)     A method of optimizing workflow for a vascular intervention based on a three-dimensional dataset of a vessel, particularly a coronary artery, acquired from a 3D imaging modality, comprising:

a) determining vessel centerline;

b) performing segmentation in the dataset to identify the vessel lumen;

c) performing plaque segmentation in the dataset to identifying the plaque in the vessel wall;

d) defining a parameter related to the plaque severity in the vessel wall;

e) creating a two-dimensional presentation image spanning the length of the segmented vessel to illustrate both the plaque severity parameter and its spatial distribution in relation to the vessel wall circumference using the position of points along the centerline in the segmented vessel as primary axis.

Fig. 2

**EP 4 629 177 A1**

## Description

FIELD OF THE INVENTION

The present disclosure relates to the technical field of medical imaging. More particularly, the present disclosure relates to methods and systems for utilizing volumetric image data to support coronary intervention procedures.

STATE OF THE ART

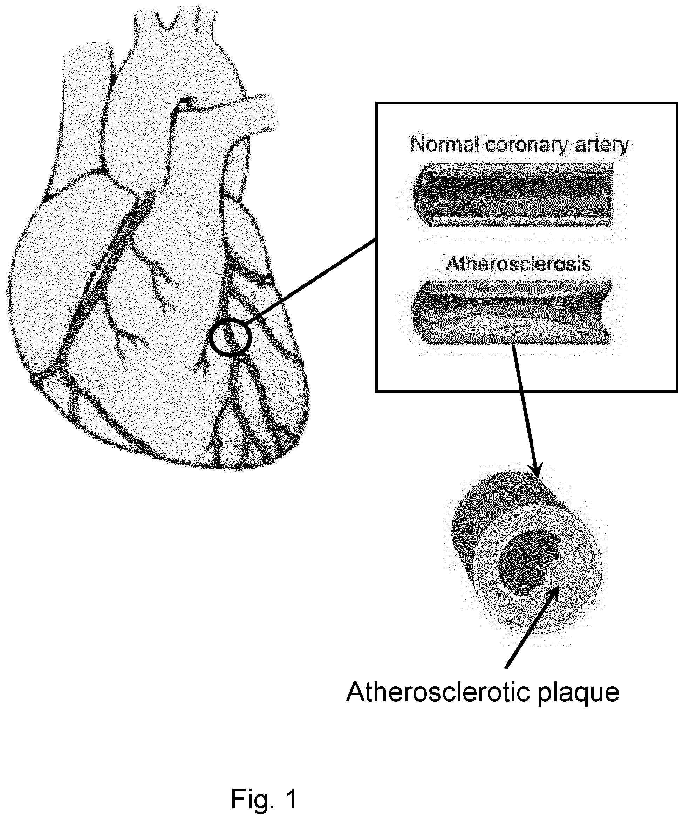

Coronary artery disease (CAD) is one of the leading causes of death worldwide. CAD generally refers to conditions that involve narrowed or blocked blood vessels that can lead to reduced or absent blood supply to the sections distal to the stenosis resulting in reduced oxygen supply to the myocardium, leading to, for instance, ischemia and chest pain (angina). Narrowing of a blood vessel is called stenosis and is caused by atherosclerosis which refers to the buildup of fats, cholesterol and other substances in and on vessel walls (plaque), see Fig. 1. Atherosclerotic plaque can be classified according to its components, such as calcified plaque, soft plaque, and mixed plaque, i.e. plaque containing calcified and non-calcified components. Such non-calcified components include extracellular matrix, smooth muscle cells, macrophages, foam cells, lipid and fibrous tissue.

X-ray angiography is the imaging modality used during treatment of stenotic (narrowed) coronary arteries by means of a minimally invasive procedure also known as percutaneous coronary intervention (PCI). During PCI, a (interventional) cardiologist feeds a deflated balloon or other device on a catheter from the inguinal femoral artery or radial artery up through blood vessels until they reach the site of blockage in the artery. X-ray imaging is used to guide the catheter threading. PCI usually involves inflating a balloon to open the artery with the aim of restoring unimpeded blood flow. Stents or scaffolds may be placed at the site of the blockage to hold the artery open.

Despite that X-ray angiography is the imaging modality used during PCI, it has some weaknesses. For instance, X-ray angiography can only assess the vessel's lumen, and not the plaques itself. This means that the (interventional) cardiologist is unable to distinguish if the plaque is lipid, calcified or a mixed. Moreover, the (interventional) cardiologists is unable to identify where the plaque begins or ends. In this end, intravascular imaging techniques may be used, such as intravascular ultrasound (IVUS) or optical coherence tomography (OCT), although these involves additional procedure risk and additional costs. Furthermore, X-ray angiography is a two-dimensional (2D) imaging technique which results that vessels are visualized foreshortened, overlapped, and moreover, the circumferential composition of the plaque cannot be assessed.

In the past two decades, computed tomography (CT) has gained recognition as an established imaging technique in the diagnostic evaluation of individuals with suspected coronary artery disease. Nowadays coronary computed tomography angiography (CCTA) has been recommended as the first-line diagnostic evaluation for patients presenting with chest pain by the task force for the diagnosis and management of chronic coronary syndromes of the European Society of Cardiology (ESC), Knuuti et al., "2019 ESC Guidelines for the diagnosis and management of chronic coronary syndromes", European Heart Journal (2020) 41, 407477. Consequently, a noteworthy portion of patients directed to the catheterization laboratory currently receive CCTA evaluation prior to undergoing invasive PCI procedures. However, CCTA is mainly employed as a determinant for proceeding with an invasive PCI procedure. Despite the indisputable significance of CCTA in furnishing anatomical details, its potential in guiding PCI procedures is frequently not fully utilized.

There are examples of using CCTA to improve PCI. For instance, a method to improve the 3D reconstruction of a coronary bifurcation by utilizing CCTA and X-ray angiography as disclosed by US patent 10,229,516 *"Method and apparatus to improve a 3D + time reconstruction"*. The described method in US patent 10,229,516 creates a 3D surface model of the coronary bifurcation using X-ray angiography and uses CCTA to resolve foreshortening and overlapping issues associated with X-ray angiography. Further, a 3D surface model of the coronary bifurcation along the cardiac cycle can be generated by the disclosed methods by US patent above.

Another example to utilize CCTA to improve PCI is disclosed by US patent 11,707,242 "*Method and system for dynamic coronary roadmapping",* in which, amongst others, a method is disclosed to allow dynamic coronary road mapping during X-ray fluoroscopy by using 3D coronary model extracted from CCTA. The extracted 3D coronary model can include plaque information. The registration during real time X-ray fluoroscopy is achieved by catheter tip detection and tracking method using a deep learning-based Bayesian filtering method. The described method in US patent 11,707,242 models the likelihood term of Bayesian filtering with a convolutional neural network and integrates it with particle filtering in a comprehensive manner, leading to more robust catheter tip detection and tracking. Despite the above, the systematic utilization of CCTA in the field of interventional cardiology is hindered by the complexity of assessing CCTA image data by the cardiologists. Moreover, the gab experience by the (interventional) cardiologist between volumetric image data and two-dimensional image data from X-ray angiography should not be underestimated.

There is thus a need for a method and system that enables physicians (e.g. the (interventional) cardiologists) to use pre-procedural CCTA to improve PCI planning and improve the PCI procedure itself.

SUMMARY OF THE INVENTION

In accordance with aspects herein, a computer-implemented method of optimizing workflow for a vascular intervention based on a three-dimensional dataset of a vessel, particularly a coronary artery, acquired from a 3D imaging modality is described that comprises:

> a) determining vessel centerline;
> b) performing segmentation in the dataset to identify the vessel lumen;
> c) performing plaque segmentation in the dataset to identifying the plaque in the vessel wall;
> d) defining a parameter related to the plaque severity in the vessel wall;
> e) creating a two-dimensional presentation image spanning the length of the segmented vessel to illustrate both the plaque severity parameter and its spatial distribution in relation to the vessel wall circumference using the position of points along the centerline in the segmented vessel as primary axis.

The method may further comprise creating an MPR image along the vessel centerline using the dataset and displaying the MPR image with the same primary axis of the two-dimensional presentation image.
According to embodiments herein, step e) may comprise:

> i) determining cross-sectional planes to the vessel through a number of points of the centerline;
> ii) on each cross-sectional plane identifying a vector having origin from the corresponding centerline point and radial orientation towards the vessel wall at a certain angle;
> iii) calculating the parameter for each angle of the vector spanning from 0° to 360° with a certain step;
> iv) showing the parameter as a function of the angle and the position of the corresponding centerline point along the centerline.

Advantageously the method may further comprise:

> defining at least one scale of values between a minimum and a maximum for the parameter with the maximum value being associated to the highest plaque thickness or lumen obstruction severity and the minimum to the lowest plaque thickness or lumen obstruction severity or viceversa;
> associating a value to such parameter on such a scale for each angle on each cross-sectional plane to represent plaque thickness and/or lumen obstruction severity.

In an embodiment, the plaque thickness is calculated for each angular position of the vector by determining the Euclidean distance between corresponding first and last segmentation voxels intersecting the vector and/or by counting the plaque segmented voxels in a plaque segmentation mask stack obtained resampling segmented plaque along the vector and multiplying the result by the resampled stack pixel dimension.
According to embodiments herein, the method may further comprise performing a healthy vessel reconstruction to determine the healthy lumen contour, the lumen obstruction being calculated by determining the ratio or the distance between the detected lumen contour and the healthy reconstructed lumen contour for each angular position of the vector.
The method may further comprise allowing the user to select a specific centerline point and showing, with or without overlay, a cross section image of the vessel in correspondence of such centerline point together with the two-bidimensional presentation image.
In an advantageous embodiment, the method comprise creating a vessel characteristic graph displaying a vessel characteristic parameter along the centerline in the segmented vessel, wherein the vessel characteristic is a parameter selected from the group consisting in: vessel curvature, lumen area, lumen diameter, calcified arc, calcified plaque index, calcium volume index, risk of stent under expansion such as, for example, calcium deposit in a lesion with maximum calcium arc greater than 180°, maximum plaque thickness greater than 0.5 mm, plaque length along vessel centerline greater than 5 mm.
In an improvement, the method may further comprise constructing a simulated 2D angiographic image from the three-dimensional dataset and enhancing such image by mapping plaque thickness or lumen obstruction to the vessel contour outlines with a colormap.
In a further improvement, the method may comprise presenting a time-resolved simulated angiographic view with or without overlay of one or more plaque severity parameters to provide guidance before a percutaneous coronary intervention.
In an advantageous configuration, the dataset is a multiphase CCTA dataset. In this case the method may comprise performing the method steps seen above on each phase of the multiphase CCTA image dataset to obtain a multiphase visualization parameter, including a multiphase centerline, lumen and plaque segmentation and creating a time-resolved simulated angiographic view.

In another advantageous configuration, the dataset is a single phase CCTA. In this case the method may comprise using or computing a motion model, deforming the centerline extraction, lumen segmentation and plaque segmentation according to the motion model to create a multiphase visualization parameter.

The invention also relates to a non-transitory computer readable medium, having stored thereon, instructions, which when executed by a computing device, cause the computing device to perform the method according to embodiments herein.

In accordance with aspects herein, an apparatus for acquiring a three-dimensional image data set of a patient is also disclosed, the apparatus comprising a data processing module configured to perform the method according to embodiments herein to assess plaque severity in a vessel, particularly a coronary artery,

Embodiments herein also relate to a system comprising:

memory to store program instructions;
a display;
a processor that, when executing the program instructions, is configured to:

acquire or obtain from a repository a three-dimensional dataset of a vessel, particularly a coronary artery;
determine vessel centerline;
perform segmentation in the dataset to identify the vessel lumen;
perform plaque segmentation in the dataset to identifying the plaque in the vessel wall;
define a parameter related to the plaque severity in the vessel wall;
create a two-dimensional presentation image spanning the length of the segment vessel to illustrate both the plaque severity parameter and its spatial distribution in relation to the vessel wall circumference using the position of points along the centerline in the segmented vessel as primary axis;
display the two-dimensional presentation image on the display.

BRIEF DESCRIPTION OF THE DRAWINGS

The characteristics of the invention and the advantages derived therefrom will be more apparent from the following description of non-limiting embodiments, illustrated in the annexed drawings, in which:

Fig. 1 shows an example of coronary atherosclerosis.
Fig. 2 shows an exemplary flow chart of an embodiment herein.
Fig. 3 shows a high-level block diagram of an example of an X-ray CT system.
Figs. 4a - 4e illustrate the creation of a volumetric MPR image.
Fig. 5 shows an example of the rotational visualization and its creation and application.
Fig. 6 shows a cross section about the creation of the rotational visualization of plaque thickness.
Fig. 7 shows more details about the creation of the visualization maps.
Fig. 8 shows another example of the rotational visualization and its creation and application.
Fig. 9 shows a 3D vessel visualization with overlay.
Fig. 10 shows examples of foreshortening in angiographic image representations.
Fig. 11 shows an example of how to represent angiographic foreshortening in the vessel visualizations.
Fig. 12 shows a detailed functional block diagram of an exemplary X-ray CT.
Fig. 13 shows a vessel characteristic parameter graph mapped to other centerline-based vessel visualizations.
Fig. 14. shows a curvature calculation based on a vessel centerline.
Fig. 15 shows a simulated angiographic image with and without overlay.
Fig. 16 shows an optimal projection map.

DETAILED DESCRIPTION OF A PREFERRED EMBODIMENT

The present disclosure relates to methods, systems and computer programs that allow physicians to use pre-procedural CCTA to improve PCI planning and improve the PCI procedure itself. Amongst others, a unique visualization method is provided which closes the gab experience by the (interventional) cardiologist between volumetric image data and two-dimensional image data from X-ray angiography.

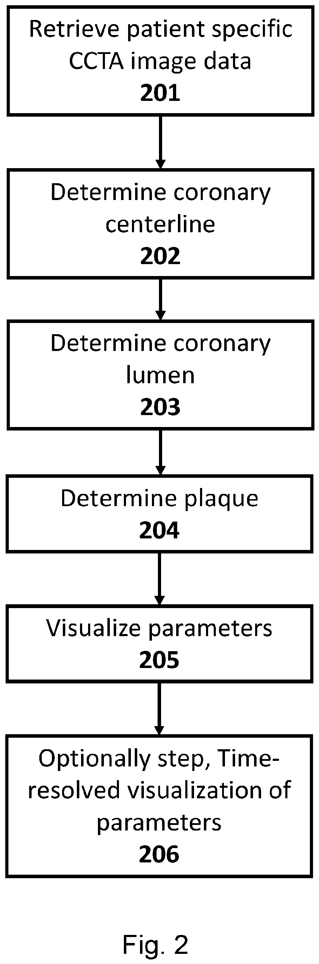

Fig. 2 shows a flow chart illustrating the operations according to an embodiment herein. The operations employ an imaging system capable of acquiring and processing volumetric images, for instance computed tomography, of an organ (or portion thereof) or other object of interest.

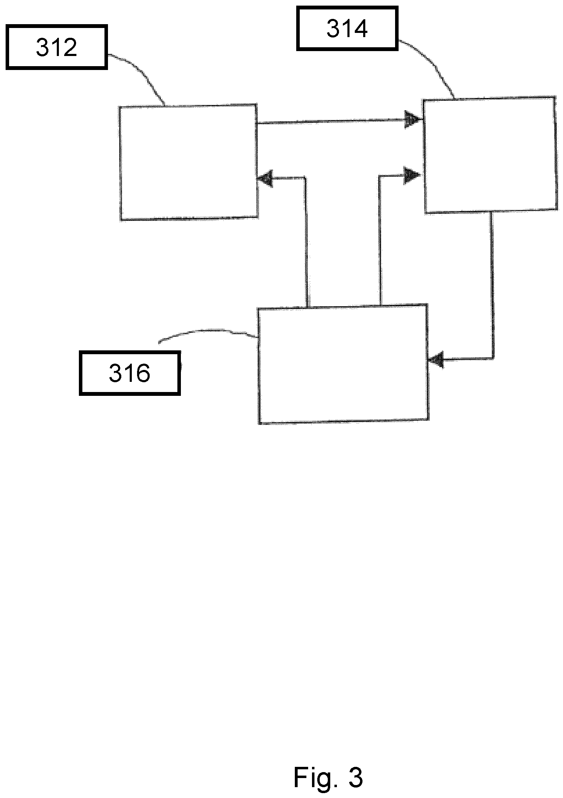

Fig. 3 is a high-level block diagram of an exemplary X-ray CT system, which can be used for the imaging system that is part of the operations of Fig. 2. The exemplary X-ray CT system includes a CT imaging apparatus 312 that operates under commands from user interface module 316 and will provide data to data processing module 314.

The X-ray CT imaging apparatus 312 captures a CT scan of the organ of interest. The X-ray CT imaging apparatus 312 typically includes an X-ray source and detector mounted in a rotatable gantry. The gantry provides for rotating the X-ray source and detector at a continuous speed during the scan around the patient who is supported on a table between the X-ray source and detector.

The data processing module 314 may be realized by a personal computer, workstation or other computer processing system. The data processing module 214 processes the CT scan captured by the X-ray CT imaging apparatus 312 to generate data as described herein.

The user interface module 316 interacts with the user and communicates with the data processing module 314. The user interface module 216 can include different kinds of input and output devices, such as a display screen for visual output, a touch screen for touch input, a mouse pointer or other pointing device for input, a microphone for speech input, a speaker for audio output, a keyboard and/or keypad for input, etc. The data processing module 314 and the user interface module 316 cooperate to carry out the operations of Fig. 2 as described below.

The operations of Fig. 2 can also be carried out by software code that is embodied in a computer product (for example, an optical disc or other form of persistent memory such as a USB drive or a network server). The software code can be directly loadable into the memory of a data processing system for carrying out the operations of Fig. 2. Such data processing systems can also be physically separated from the CT system used for acquiring the images making use of any type of data communication for getting such images as input.

In this example, it is assumed that the computed tomography system has acquired and stored at least one three-dimensional image sequence of an object of interest. Any image device capable of providing a three-dimensional angiographic image stack can be used for this purpose. For example, a computed tomography angiographic system can be used. Examples of such systems are those manufactured by Siemens (SOMATOM Pro.Pulse) or Philips (CT 6000 iCT).

An embodiment is now disclosed with reference to Fig. 2. The operations depicted in this figure can be performed in any logical sequence and can be omitted in parts. As it is an objective of the application to provide a select (e.g., optimal) workflow that can be used during the interventions, workflow example steps will also be referenced.

### Retrieval of the patient specific image data

As can be seen in Fig. 2, the workflow comprises a number of steps. The first step 201 involves the retrieval of the patient specific coronary computed tomography angiography (CCTA) image dataset. CCTA is the use of computed tomography (CT) angiography to enhance the coronary arteries of the heart. A CCTA is acquired after the patient receives an intravenous injection of radiocontrast and then the heart is scanned using a CT scanner, allowing physicians to assess the extent of coronary artery disease such as luminal narrowing and coronary plaque extent. This CCTA dataset can be obtained from a digital storage database, such as an image archiving and communication system (PACS) or a VNA (vendor neutral archive), a local digital storage database, a cloud database, or acquired directly from a CT imaging modality. During the CCTA imaging, a contrast agent was induced in the patient. Furthermore, the CCTA imaging can be ECG triggered.

### Determine coronary centerline

In step 202, the coronary vessel centerlines are determined from the dataset of step 201. The coronary centerline represents the center of the coronary lumen along the coronary section of interest. This can be a single coronary artery, a coronary bifurcation or the full coronary tree. In case bifurcation and/or the coronary tree is analyzed, multiple centerlines are extracted, as for example two coronary centerlines are extracted when analyzing one bifurcation; one coronary centerline identified by a proximal location to a distal location within the main branch of bifurcation, and one centerline identified by a proximal location to a distal location within the side branch of bifurcation. For the purpose of current step, it is not required that the extracted coronary centerline represents the center of the coronary lumen accurately. A rough estimation of the coronary centerline is sufficient, although the coronary centerline should not exceed the coronary lumen. The extraction of the coronary centerline can be performed manually or (semi)automatically. An example of a semiautomatic approach is described by Metz et al., "Semi-automatic coronary artery centerline extraction in computed tomography angiography data", proceedings / IEEE International Symposium on Biomedical Imaging: from nano to macro, May 2007. Another example of semiautomated approach is provided by by Metz et al., "Coronary centerline extraction from CT coronary angiographic images using a minimum cost path approach", Med Phys. 2009 Dec;36(12):5568-79. An example of an automatic coronary centerline extraction method is described by Wolterink et al. in which machine learning is utilized to automatically extract the coronary centerline in "Coronary artery centerline extraction in cardiac CT angiography using a CNN-based orientation classifier", Med Image Anal. 2019 Jan; 51:46-60. The method extracts the coronary centerlines between the ostium (left coronary ostium and right coronary ostium) and the most distal location as present in the CCTA image dataset. Alternatively, the coronary centerlines can be manually identified in the CCTA dataset, or semi-manually indicated and drawn with proper annotation and correction tools as for instance using the growing centerline feature within 3mensio Structural Heart software application (3mensio Medical Imaging, the Netherlands). The growing centerline feature relies on a curved multiplanar reformatted (curved MPR) image which enables the manual definition of a coronary centerline. User clicks in the coronary lumen within the curved MPR allows identifying the coronary centerline. With each additional user click, the curved MPR is reformatted along an extrapolation of the user defined centerline so far. In case the newly reformatted curved MPR does not show the coronary lumen, manually rotating the curved MPR allows to visualize the coronary lumen.

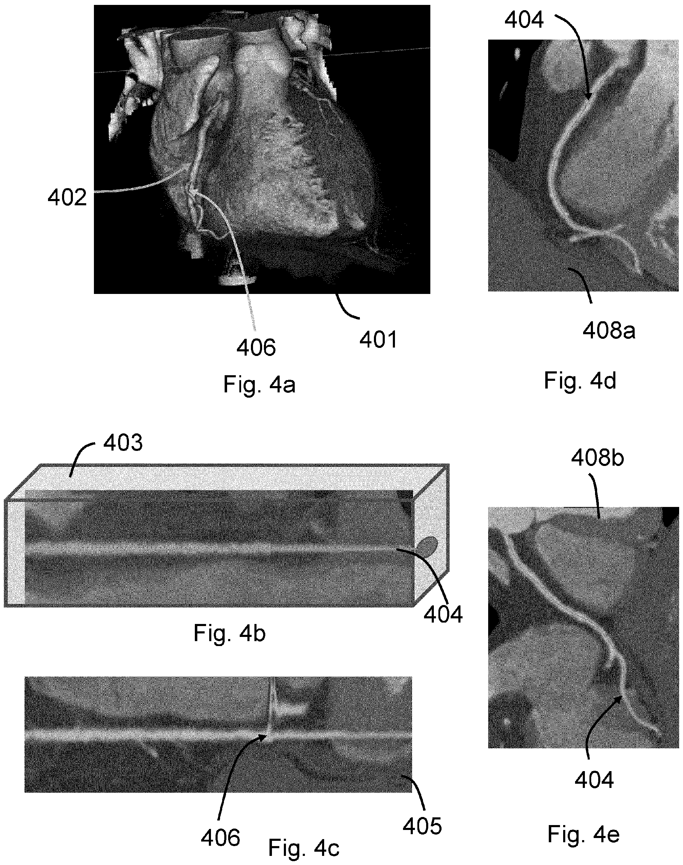

Figs. 4a - 4e provide an illustration of the creation of a volumetric (3D) MPR image, further called an MPR image. Image 401 of Fig. 4a shows a volumetric rendering of a CCTA dataset (Fig. 2, 201), in which the right coronary artery 402 is selected as an example to create an MPR image. With respect to MPR, there is a distinction between straight MPR and curved MPR. For the straight MPR as well for the curved MPR the extracted axial trajectory (e.g. centerline, 404) is used to create isotropic MPR image from the obtained image dataset 201. The resolution of the MPR image is predefined and is for example 0.3 mm. The MPR image can also be created in a non-isotropic way. A straight MPR reformats the image towards a cuboid image 403 along the extracted axial trajectory (e.g. coronary centerline) 402 in such a way that the coronary centerline is in the center of the cuboid 404. Image 403 of Fig. 4b illustrates the cuboid resampled image (straight MPR) and one 'slice' is visualized within the cuboid resampled image for easy interpretation. Image 405 of Fig. 4c shows a one 'slice' of the same resampled image, but the visualization plane is rotated around the centerline 404, to illustrate the visualization of the coronary bifurcation (406) within the extracted right coronary artery. A curved MPR image is reconstructed along the curved course of the coronary centerline. Images 408a and 408b of Figs. 4d and 4e show two examples of a curved MPR image and visualized as a single 'slice', in which the slice orientation refers to a curved plane which can be rotated along the curved coronary artery.

Optionally, based on the extracted coronary centerline tree, the centerlines can be labelled for instance according to the model introduced by the American Heart Association (Austen et al, "A reporting system on patients evaluated for coronary artery disease. Report of the Ad Hoc Committee for Grading of Coronary Artery Disease, Council on Cardiovascular Surgery, American Heart Association", Circulation 51, 5-40. 1975). This labeling can be performed manually or automatically. An example of a fully automatic anatomical label method, using a machine learned based network, is disclosed by Hampe et al., "Graph neural networks for automatic extraction and labelling of the coronary artery tree in CT angiography", Computers in Biology and Medicine, 2023.

Alternatively, the vessel labelling can also be obtained manually by a user who indicates the correct anatomical label of a vessel centerline extracted with any of the methods described above.

### Determine coronary lumen

In step 203, the coronary lumen is determined. Coronary lumen segmentation in CCTA distinguishes contrast-enhanced blood inside the coronary vessels from surrounding structures. Segmentation can be done in a manual fashion, though semi or fully automated methods exist as well.

Firstly, coronary lumen segmentation can be done manually by an expert observer. Manual segmentation of CCTA scans by an expert observer, e.g. radiologists, is time-consuming because only 2D slices of the CCTA images dataset are available after image acquisition. Extracting coronary arteries from 2D images relies on expert knowledge.

An example of a semi-automatic lumen segmentation method is the use of graph cuts to separate vessel voxels from background. Given a coronary centerline, the method first locates strong edges that signify a crossing from lumen into surrounding tissue as for instance teaches by Schaap et al., "Coronary Lumen Segmentation Using Graph Cuts and Robust Kernel Regression", Lecture Notes in Computer Science, 5636, 528-539. Deep learning approaches can also be used to perform coronary lumen segmentation in a semiautomated or fully automated way. For example, a Graph Convolutional Network (GCN) can be used to determine a luminal surface mesh as disclosed by Wolterink et al. "Graph Convolutional Networks for Coronary Artery Segmentation in Cardiac CT Angiography" GLMI@MICCAI (2019).

Alternatively, some form of U-net can be trained to obtain a segmentation of the coronary tree lumen as for instance taught by Gharleghi et al., "Automated segmentation of normal and diseased coronary arteries - The ASOCA challenge", Computerized medical imaging and graphics: the official journal of the Computerized Medical Imaging Society vol. 97 (2022).

A third example is the tuning of a pre-trained segmentation network through transfer learning as for instance described by Zair et al., "An automated segmentation of coronary artery calcification using deep learning in specific region limitation", Med Biol Eng Comput 61, 1687-1696 (2023).

Optionally, the coronary centerline as determined by step 202 can be optimized based on the segmented coronary lumen as described above. This optimization uses the segmented coronary lumen geometry and creates a centerline representing the center of the segmented coronary lumen along the length of the vessel. This can be performed for instance by applying vessel erosion on the segmented coronary lumen, for example as described by Zwettler et al., "Fast medial axis extraction on tubular large 3D data by randomized erosion", VISIGRAPP 2008, CCIS 24 (2009): 97-108.

### Determine plaque

In step 204, the coronary atherosclerotic plaque is determined. Atherosclerotic plaque (see Fig. 1) can be classified according to its components, such as calcified plaque, soft plaque, and mixed plaque, i.e. plaque containing calcified and non-calcified components. Such non-calcified components include extracellular matrix, smooth muscle cells, macrophages, foam cells, lipid and fibrous tissue. Calcified plaque is considered stable and its amount in the coronary artery is a strong predictor of cardiovascular events. Unlike calcified plaque, non-calcified plaque and mixed plaque are considered unstable and more prone to rupture. As different types of plaque and varying grades of stenosis lead to different patient management strategies, it is important to detect coronary artery plaque.

During PCI, having knowledge on the extent and location of calcified plaque is important to perform an optimal PCI procedure. Within CCTA the coronary lumen can be distinguished from the vessel wall and calcified plaque based on Hounsfield units in relation to system settings. Tube voltage and patient weight in particular affect the absolute and relative difference in Hounsfield units between lumen and other structures. (Huda et al., "Technique factors and image quality as functions of patient weight at abdominal CT", Radiology vol. 217,2 (2000):430-5) Additionally, contrast concentration corresponds linearly to the Hounsfield units of blood >Rybicki et al., "Patterns of Opacification in Coronary CT Angiography: Contrast Differences and Gradients", Current cardiovascular imaging reports vol. 7,10 (2014)). Calcified plaque segmentation can be obtained based on Hounsfield units of the CCTA image dataset in combination with system setup for the CT acquisition (Cheng et al., "Automated 3-dimensional quantification of noncalcified and calcified coronary plaque from coronary CT angiography", Journal of cardiovascular computed tomography, 2009-3(6), 372-382). This segmentation method can also be made patient specific by looking at regions of interest of the patient, for example the ascending aorta as described for instance by Mylonas et al., "Quantifying coronary artery calcification from a contrast-enhanced cardiac computed tomography angiography study", European Heart Journal - Cardiovascular Imaging 15, 210-215, 2014.

Alternatively, calcified plaque segmentation can be achieved by a method based on machine learning as for instance described by Parodi et al, Patient-specific prediction of coronary plaque growth from CTA angiography: a multiscale model for plaque formation and progression", IEEE Transactions on Information Technology in Biomedicine, 16(5), 952-965., 2012.

Alternatively, plaque segmentation and classification can be indicated and segmented manually.

Additionally, to calcified plaque, similar methods can be used to segment soft plaque and/or mixed plaque as, for instance, the method as disclosed by Motoyama et al., Atherosclerotic plaque characterization by 0.5-mm-slice multislice computed tomographic imaging comparison with intravascular ultrasound", Circulation Journal, 71(3), 363-366, 2007. Another method to detect and classify coronary plaque using machine learning is disclose by US patent 10,699,407 "*Method and system for assessing vessel obstruction based on machine learning*", in which, amongst others, a method is disclosed to allow detection and classification of coronary plaque from a CCTA image dataset.

Alternatively, the segmentation can be performed on a CT imaging method with better visibility of calcified plaque by using Calcium Scoring Computed Tomography (CSCT) imaging. The additional CSCT image needs to be mapped to the CCTA image obtained in step 201. (Yang et al., "Automatic coronary calcium scoring using noncontrast and contrast CT images", Med. Phys. 43 (5), 2174-2186, 2016).

### Visualization parameters

As mentioned before, X-ray angiography is the imaging modality what is used during a PCI. Despite the fact that X-ray angiography is the imaging modality used during PCI, it has some weaknesses. For instance, X-ray angiography can only assess the vessel's lumen, and not the plaques itself. This means that the (interventional) cardiologist is unable to see where the coronary plaque is and, furthermore, is unable to distinguish if the plaque is lipid, calcified or a mixed. Moreover, the (interventional) cardiologist is unable to identify where the plaque begins or ends. The visualizations described below are aimed at helping to alleviate this issue.

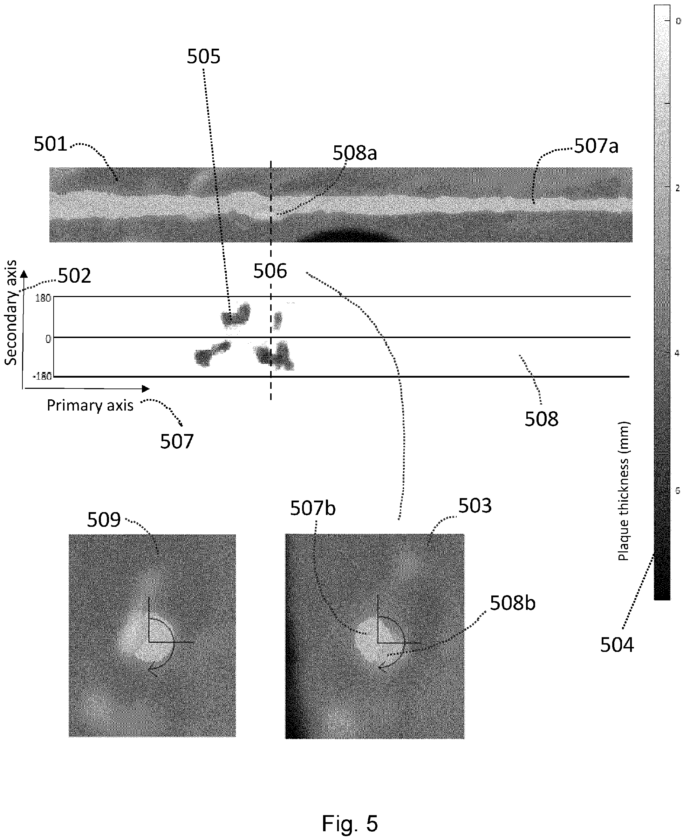

In step 205, parameters of the coronary vessel can be visualized in several ways. In a first embodiment the vessel is visualized in a way which directly represents the thickness of the calcified plaque and/or soft plaque and/or mixed plaque at a certain point along the vessel centerline including its spatial location with respect to the coronary artery circumferential lumen, as illustrated by Fig. 5, 506. This is done by building an image in which the primary axis (507) represents the centerline of the vessel, the secondary axis (502) represents the viewing angle around the vessel centerpoint, and the color coding of a datapoint (504, 505) represents the thickness of the calcified plaque and/or soft plaque thickness in the corresponding direction.

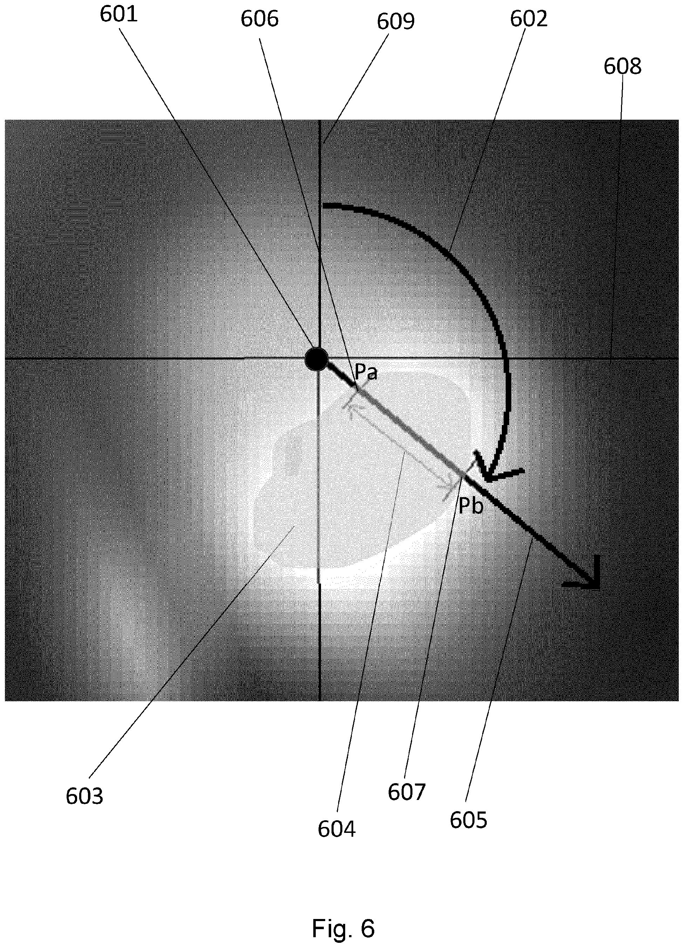

In Fig. 5, 501 represents a straight MPR in which the segmented coronary lumen (507a, as a result from step 203) and the segmented plaque (508a, as a result from step 204), in this example calcified plaque, are visible as overlays on the MPR visualization. A cross section is illustrated by 503 at the location 506 within the straight MPR image (501). Within this cross-section (503), the segmented coronary lumen (507b) and the segmented plaque (508b) are again visible as overlays on the cross-section. Based on this cross-sectional image (503), the secondary axis (502) of the graphical view (508) at location (506) is created, which is based on a polar resampling from the centerpoint. This is further explained with reference to Fig. 6.

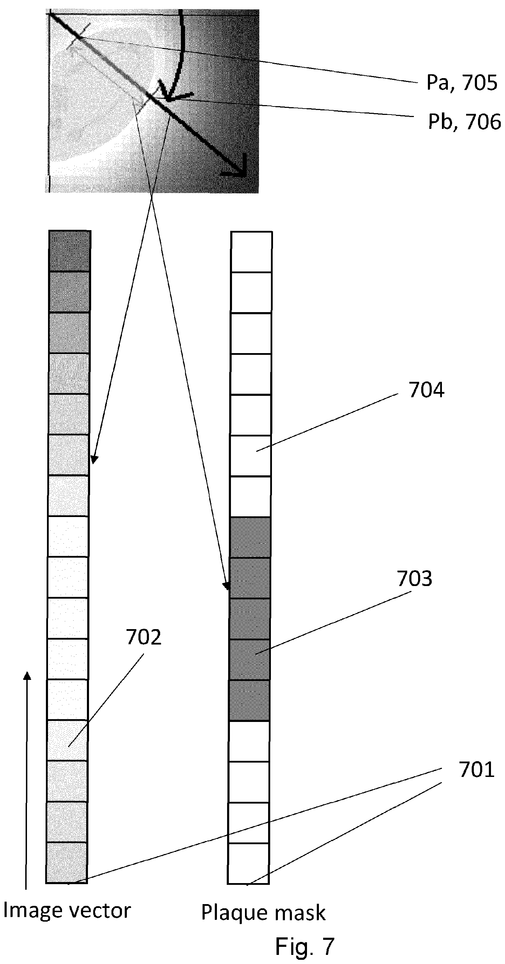

Fig. 6 shows a cross-sectional image at a certain centerline position along the length of segmented coronary artery, for instance at location 506 as illustrated in Fig. 5. Within Fig. 6, the segmented plaque, illustrated by 603, is superimposed. As exemplary shown in Fig. 6, the values on the secondary axis (502) of the graphical view (508) of Fig. 5 are obtained by defining the plaque thickness (604) on a polar resampled line (605). This polar resampled line (605) is created by a vector from the centerline point (601). This is repeated for a full circle around the centerline point (360°) by a predefined delta angle (for instance 1 degree). An example is provided by vector (605), which shows a polar resampled line at angle (602). In this particular example, the plaque thickness is the distance between point Pa (first location of plaque from centerline point (606)) to point *Pb* (last location of plaque from centerline point (607)). The calculation of the plaque thickness is further described with reference to Fig. 7.

Fig. 7 shows a polar vector (605) and illustrates a resampled stack of voxels containing image intensities (702) along this vector, which is organized starting from the centerline point (701, 601). The same can be done for the segmented plaque obtained during step 204. This results in another matching voxel stack, which contains pixels which are either part of the plaque segmentation (703), or not part of the segmentation (704). The first point of the plaque segmentation (looking from the centerline point) is defined as *Pa (705)*, while the last point of the plaque segmentation is defined as *Pb* (706). The plaque thickness at this vector can be calculated in several ways, one of which is to determine corresponding first (point Pa, 705) and last (point *Pb*, 706) segmentation voxels back projected in 3D space and calculating the distance between them.

$$thickness = \sqrt{(Pa_x - Pb_x)^2 + (Pa_y - Pb_y)^2 + (Pa_z - Pb_z)^2} \qquad \text{(Eq. 1)}$$

Alternatively, the thickness can be calculated by counting the plaque segmented voxels (n) in the plaque segmentation mask stack (703) and multiplication with the resampled stack pixel dimension (v).

$$thickness = n * v \qquad \text{(Eq. 2)}$$

The resampled stack pixel dimension is dependent on the pixel dimensions in x-axis ($p_x$, 608) and y-axis ($p_y$, 609) direction in the cross-sectional view (Fig. 6) and the angle $\alpha$ (602).

$$v = \sqrt{(p_x \sin(\alpha))^2 + (p_y \cos(\alpha))^2} \qquad \text{(Eq. 3)}$$

The resulting value is thus linked to a specific centerline point, at a specific angle, and all these values can be combined to form a visualization (508). As such a visualization shares an axis with the MPR visualization (501 and 508 have the same primary axis), plotting them next to each other gives a user direct visual feedback of the vessel structure.

The approach as described by equation 2, allows that possible gaps (healthy tissue and/or non-calcified) in the plaque segmentation, as a result of step 204, are excluded from the calculated plaque thickness.

The form of visualization illustrated by the graphical view (508) of Fig. 5 has as advantage that plaque at certain angles not visible in a straightened MPR view (501) can be seen in this 360-degree view (for example, plaque at 505), resulting in a graphical visualization (508) in which all plaques in the vessel are visible in a single view, including spatial information like the presence of a fully circumferential plaque (plaque at all 360 degrees around a vessel). In addition, it also gives a direct representation of the severity (thickness) of the plaque due to the color coding attached to each plaque position within graphical view 508, for instance plaque (505) which is not visible in the MPR view (501).

Optionally, for the secondary axis it is possible to align the angles with physiological landmarks within the patient, for example, the center of the heart. In such a case, the 0-degree mark on the secondary angle can be defined as the vector pointing the closest to the physiological landmark of the patient.

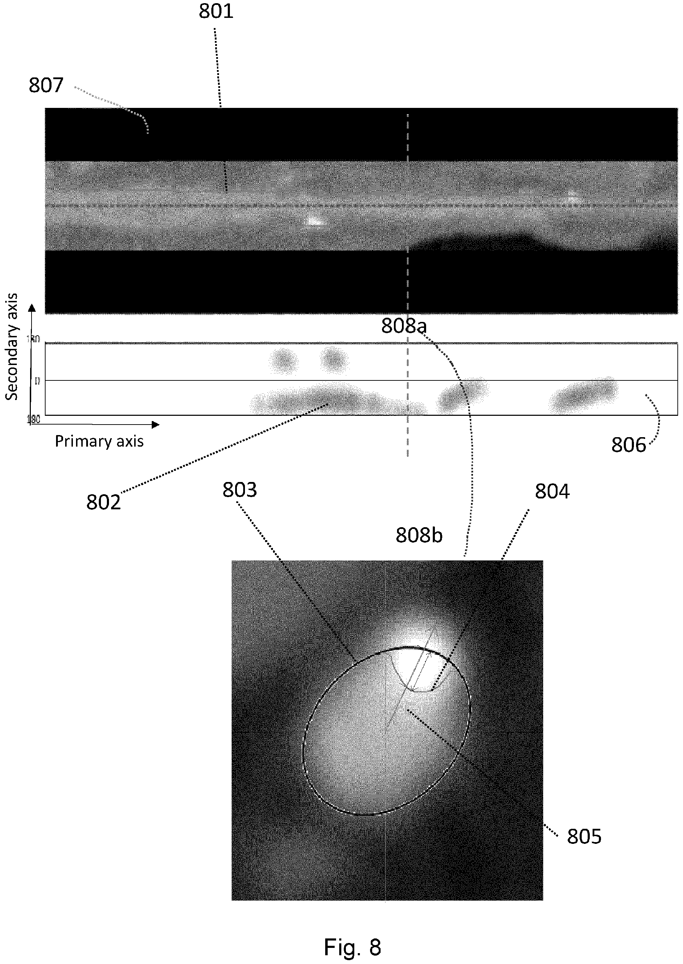

In a different embodiment, the graphical view (806) is generated in a way which represents the relative lumen obstruction, and its spatial location, along the vessel as compared to a healthy vessel reconstruction and is further described with reference to Fig. 8. Within Fig. 8, an MPR view is shown by (807) in which the lumen segmentation boundary (801) as a result of step 203 is superimposed. A healthy vessel reconstruction, which represents the luminal vessel geometry in case the vessel is healthy, is performed by using the lumen segmentation as obtained by step 203. A method to obtain such a healthy vessel reconstruction can be based on the teachings by US patent 10,229,516 *"Method and apparatus for quantitative analysis of a tree of recursively splitting tubular organs"*. To create the graphical view (806), which represents the relative lumen obstruction and its spatial location along the vessel as compared to a healthy vessel reconstruction, a similar method as describe before with reference to Fig. 5 can be used, but in this instance the region of interest is no longer the plaque thickness but the ratio or the distance between the detected lumen contour (804) and the healthy reconstructed lumen contour (803) at a certain polar resampled vector (805). This is further illustrated by the image (808b) which shows a cross section image at the location 808a within the straight MPR image (807). Within this cross-section (808b), the segmented coronary luminal border (804) and the healthy reconstructed luminal border (803) are again visible as overlays on the cross-section. Based on this cross-sectional image, the secondary axis of the graphical view (806) at location (808a) is created, which is again based on a polar resampling from the centerpoint as described before. This results in a graphical view (806) which shows the relative lumen obstruction, and its spatial location along the length of the vessel. The relative luminal obstruction can be color coded representing the amount of relative obstruction. Within the graphical view (806) the primary axis represents the centerline of the vessel, the secondary axis represents the viewing angle around the vessel centerpoint.

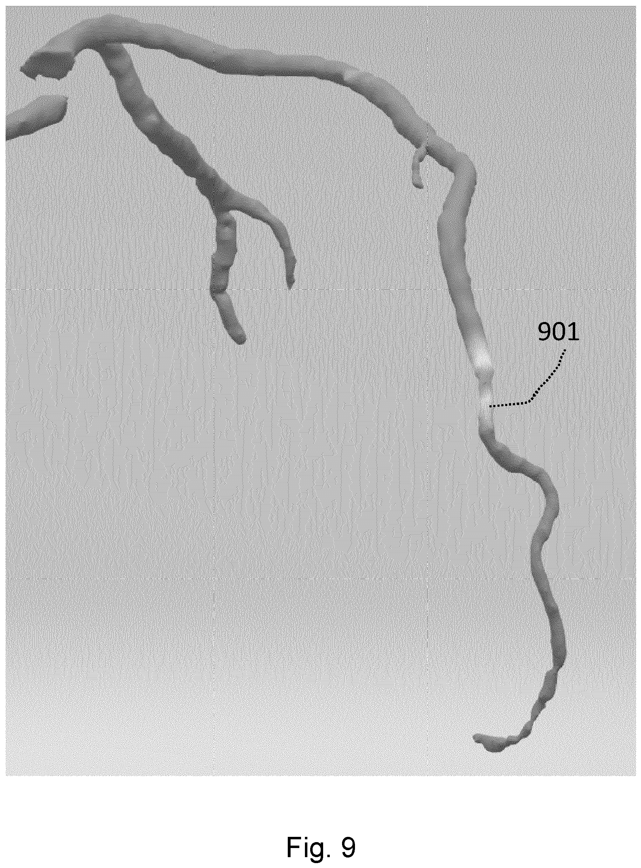

Alternatively, the plaque thickness and/or the relative lumen obstruction at an angle at a centerline point as described with reference to Fig. 5 and Fig. 8 can also be used as a color-coded overlay on a 3D model of a coronary vessel as shown in Fig. 9. In this case, each point on the 3D mesh is mapped to a vessel centerline point and angle and plaque thickness or the relative lumen obstruction can be color coded (901).

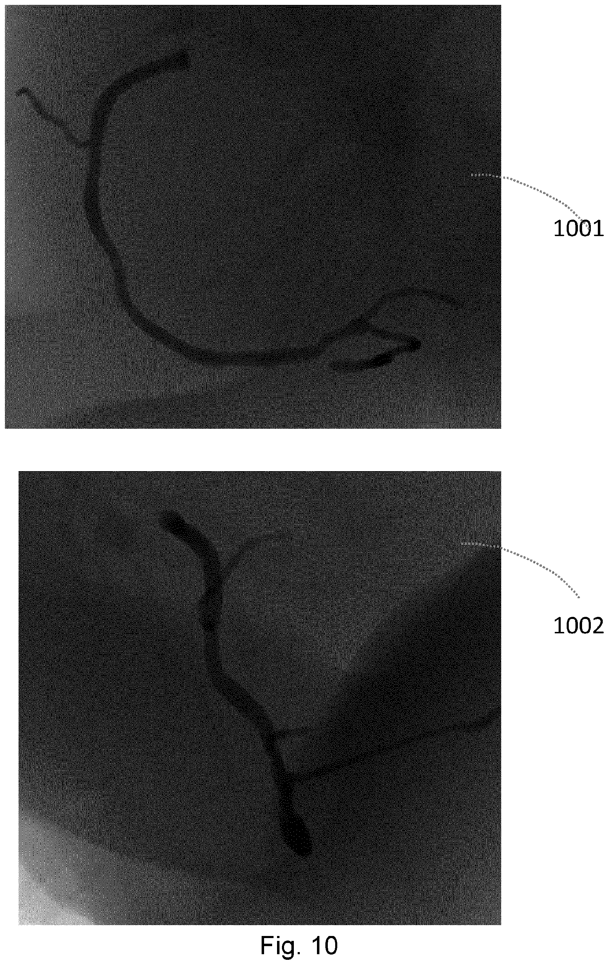

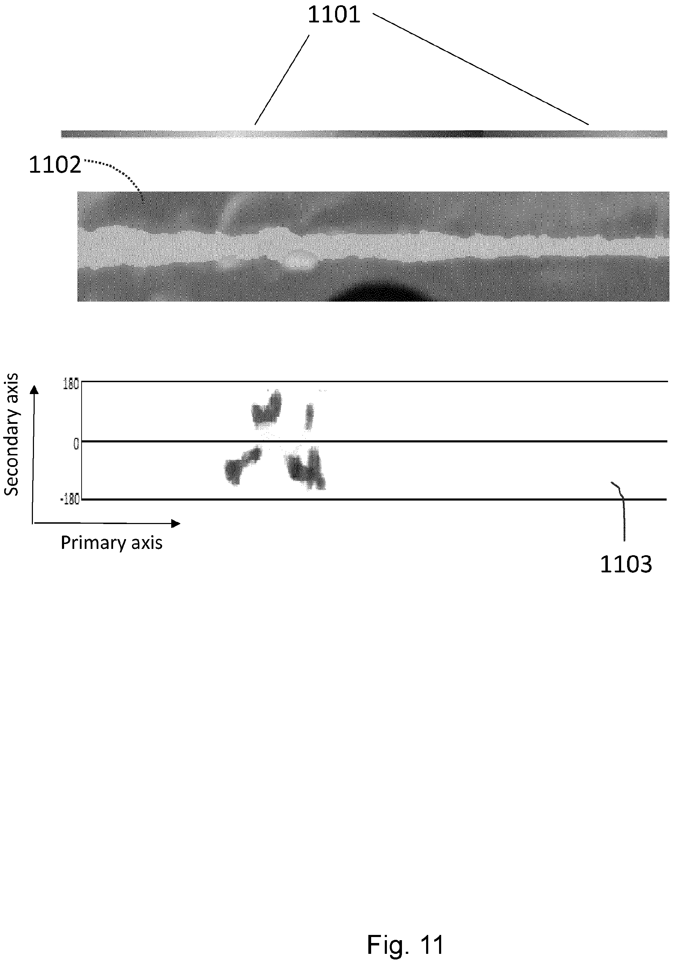

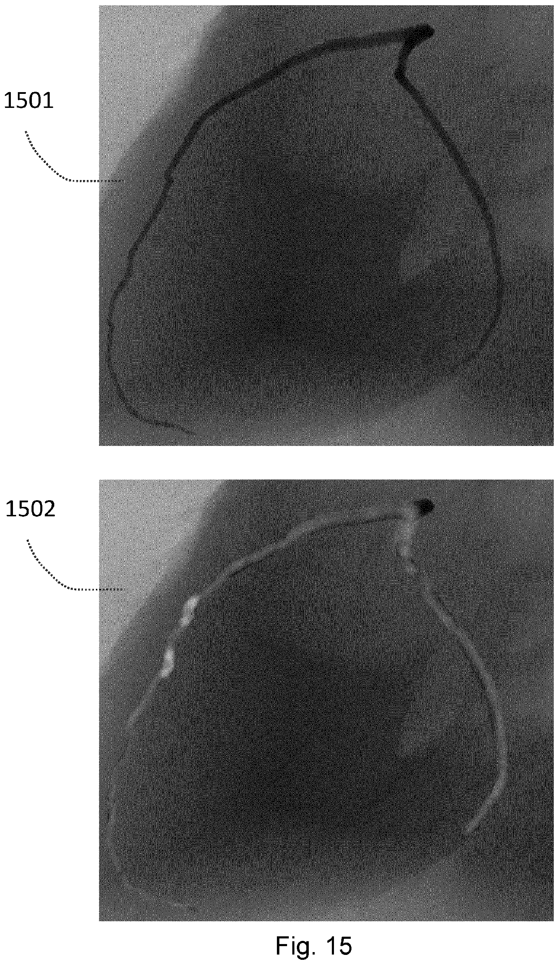

Alternatively, in all visualizations described in which a vessel centerline is used on the primary axis, this centerline can instead be adjusted to the foreshortened length shown in a corresponding angiographic view of the vessel. Such angiographical view can also be simulated based on the CCTA dataset and is further described in detail with reference to Fig. 15. The amount of foreshortening is dependent on the viewing angles of the (simulated) angiographic view. In Fig. 10, the same vessel, in this example a right coronary artery, is visualized from an angle with little foreshortening resulting in an angiographic image represented by (1001) and from an angle with a lot of foreshortening in the proximal part of the vessel resulting in an angiographic image represented by (1002). The amount of foreshortening at a certain point can be mapped to a colormap and the corresponding visualizations (Fig. 5, Fig. 8) can be corrected and resampled to fit this foreshortened length. An example is provided by Fig. 11, which shows the graphical view of the plaque thickness and spatial location as explained before with reference to Fig. 5. Within Fig. 11, the amount of foreshortening at a certain point along the vessel is visualized by, for instance, a color map (1101) and the corresponding visualizations can be corrected and resampled to fit this foreshortened length, the MPR view (1102) and the graphical view (1103).

Additionally, in the visualizations of Fig. 5, 8, 11 or 13 markers can be placed suggesting start and end position of a stent. This results in providing the user with a suggestion of the length and diameter of a stent which can be used. Optionally, these start and end position markers can be used to predict post FFR scores for the patient as for instance by the method as disclosed by US patent application 18/206,536 *"Method and system for assessing functionally significant vessel obstruction based on machine learning"*.

### *Vessel characteristics visualizations*

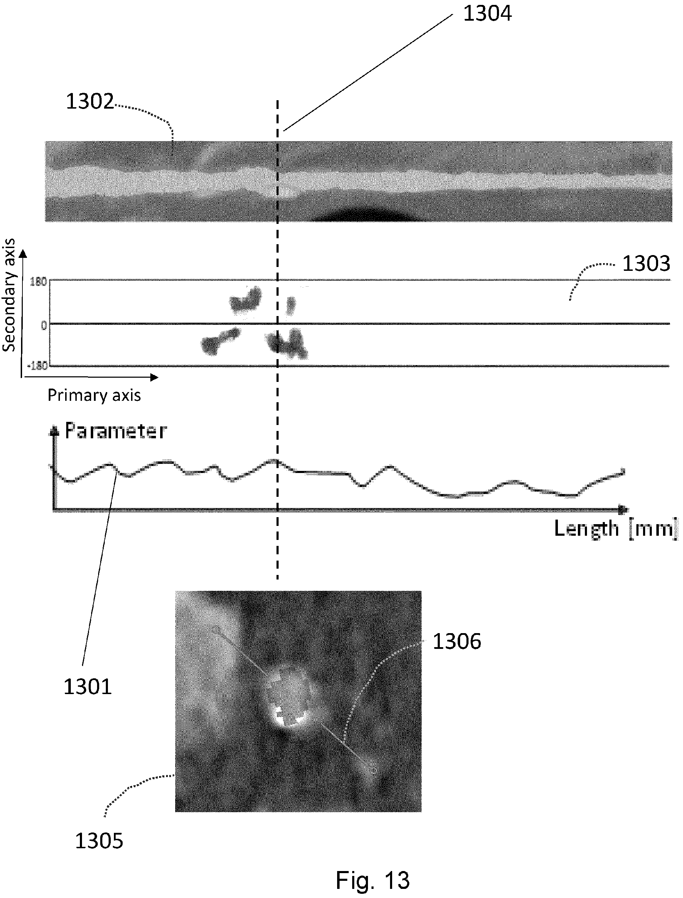

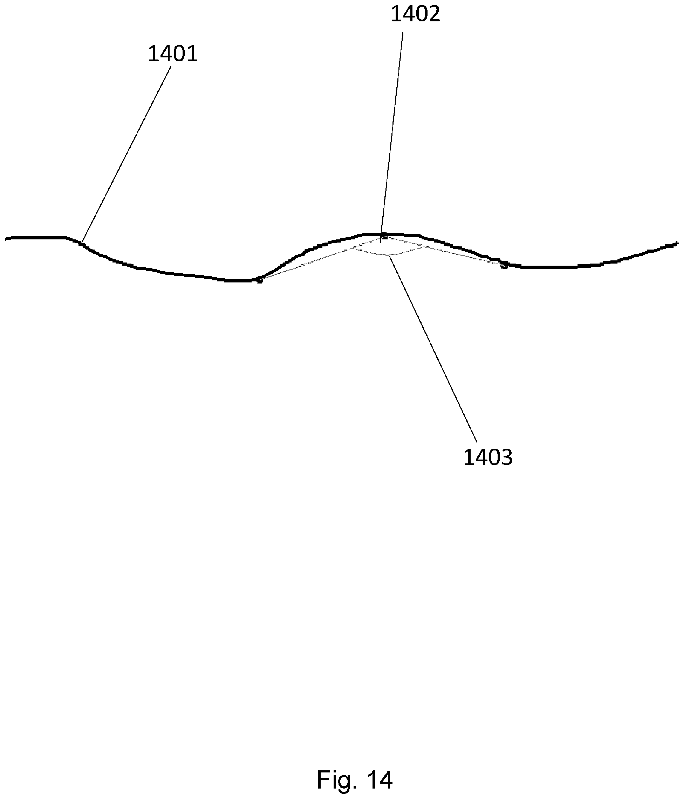

In a different embodiment, the vessel is visualized in a way which represents one or more vessel characteristics along the vessel length. This visualization could comprise a primary axis representing the centerline of the vessel and a secondary axis representing a vessel characteristic value. This is further illustrated by Fig. 13. Fig. 13 shows the same presentation as Fig. 5, in which a parameter graph (1301) is visualized which has the same primary axis as the MPR view (1302) and the graphical view (1303). Furthermore, a location on the primary axis (1304) is visualized and this is linked to the other views. Optionally, the corresponding cross section view (1305) can be visualized which also indicates the MPR view plane (1306). The vessel characteristic graph (1301) can present different vessel characteristics, for example the vessel curvature (the rate of change of direction of a curve with respect to distance along the curve, which can for instance be approximated as a measurement of the angle (1403) between different points (1402) on the centerline (1401) of a vessel as shown in Fig. 14), the plaque thickness (step 204), the lumen area or lumen diameter (derived from the lumen segmentation step 203), calcified arc (how many degrees around a centerline point which contain calcified plaque), a parameter that provides information if calcium modification should be considered (calcium volume index, explained below), or a parameter that provides the risk of stent under expansion (explained below).

The parameter that provides information if calcium modification should be considered is primarily related to the calcified plaque thickness, as calcified plaque thickness is a key determinant of the ability of an angioplasty balloon to fracture calcium as described by Fujino A et al. in "Predictors of calcium fracture derived from balloon angioplasty and its effect on stent expansion assessed by optical coherence tomography", JACC Cardiovasc Interv. 2018; 11:1015-1017. The parameter that provides information if calcium modification should be considered can, for instance, be the calcium volume index as described by Ali ZA et al., "Optical Coherence Tomography Characterization of Coronary Lithoplasty for Treatment of Calcified Lesions: First Description". JACC Cardiovasc Imaging. 2017;10(8):897-906. Ali ZA et al describe a method to calculate the calcium volume index. In this paper, an calcium volume index was introduced and calculated as mean calcium arc × calcium length (° × mm) and a calcium severity was stratified into tertiles according to calcium volume index.

The parameter that provides the risk of stent under expansion can for instance be based on the teachings of Fujino et al., "A new optical coherence tomography-based calcium scoring system to predict stent underexpansion". EuroIntervention. 2018;13(18): e2182-e2189. Published 2018 Apr 6, in which is described that lesion with a calcium deposit with maximum calcium arc greater than 180°, a maximum plaque thickness greater than 0.5 mm, and a plaque length along vessel centerline greater than 5 mm could be at risk of stent under expansion.

Alternatively, a cross sectional view can be shown of the vessel with vessel characteristics shown as overlay of the cross-sectional view. These vessel characteristics are, for example, the artery curvature, the plaque thickness, the plaque segmentation, the lumen segmentation, the calcified plaque arc, a parameter that provides information if calcium modification should be considered, and a parameter that provides the risk of stent under expansion, all which similar to the parameters as described above.

### Simulated angiographic visualization

Additionally, a back projection of the segmented vessel can be visualized in a simulated angiographic x-ray image of the patient as shown in Fig. 15. A simulated 2D angiographic image (1501) is generated based on an original 3D volumetric image dataset, for instance the CCTA dataset from step 201, and simulates the 2D x-ray angiographic image as acquired with an x-ray system. A simulated 2D angiographic image can be used to allow physicians to simulate the 2D angiographic X-ray image from different perspectives and as such predict which projection angles during the 2D X-ray angiography procedure will produce a good view of the anatomy of interest. The physician can compare options for the projection angles ahead of time, which may reduce radiation dose and procedure time. An example of such simulation solutions is known by US 9,008,386 of the present applicant where a workstation that contains a simulation of a 2D X-ray Angiography image based on a CCTA data is disclosed. Another example to create a simulated angiographic image is disclosed by US 10,192,352, in which the simulated angiographic image is created based on 3D segmented objects, such as the coronary lumen and coronary plaque. A simulated angiographic view can be enhanced by mapping plaque thickness to the vessel contour outlines with a colormap, as shown in Fig. 15 by 1502.

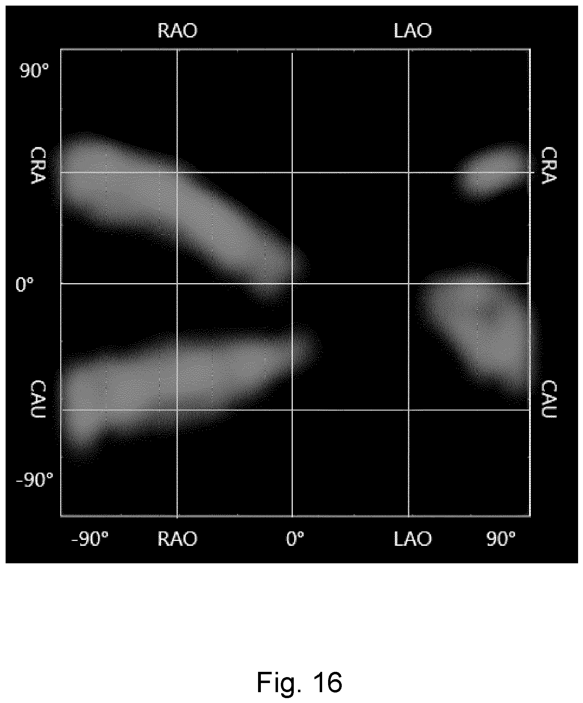

Optionally, based on a segmented vessel, or a segmented vessel tree, an indication of optimal x-ray angiographic viewing angles can be suggested to the user as shown in Fig. 16. In such a view, color coding can indicate favorable viewing angles to the user. In case of a vessel tree, viewing angles which would result in vessel overlap can be excluded. A way to determine these angles is using the teachings of EU patent EP3128481B1 (Aben et al., *Method and apparatus to improve a 3d+ time reconstruction,* 2015). This representation shows the user the optimal viewing angles to use when creating x-ray angiographic images which result in the least amount of foreshortening for the vessel or vessel tree of interest.

Additionally, in the angiographic visualizations above markers can be placed suggesting start and end position of a stent. This results in providing the user with a suggestion of a length and diameter of a stent which can be used.

Optionally, these markers can be used to predict post FFR scores for the patient as for instance by the method as disclosed by US patent application 18/206,536 *"Method and system for assessing functionally significant vessel obstruction based on machine learning".*

### Time-resolved visualization of parameters

An optional step to perform is to give guidance before a Percutaneous Coronary Intervention (PCI) (Fig. 2, 206) which includes coronary motion. This to provide additional information to the physician which includes the coronary motion to enhance support with planning. This is achieved through presenting a time-resolved simulated angiographic view with or without overlay. This time-resolved is preferably created using a similar temporal resolution as the X-ray system, for instance 15 frame per second.

In case the image dataset from step 201 of Fig. 2 represents a multiphase CCTA dataset, the steps [202 - 205] can be performed on each phase of the multiphase CCTA image dataset, resulting in a multiphase visualization parameter (205), including a multiphase centerline, lumen and plaque segmentation (together multiphase segmentation). Based on the multiphase CCTA and the multiphase visualization parameters and the multiphase segmentation, a time-resolved simulated angiographic view can be created as shown in the bottom part of Fig. 15.

In case the image dataset from step 201 of Fig. 2 represents a single phase CCTA, the coronary motion needs to be estimated in order to create a time-resolved simulated angiographic view. An example to estimate the coronary motion based on a single phase CCTA image dataset is provided by Baka et al., "Statistical coronary motion models for 2D + t/3D registration of X-ray coronary angiography and CTA", Medical Image Analysis 17 (2013) 698-709. In this work a statistical motion model of the coronary arteries combined with a single phase CCTA dataset is used to create a patient specific coronary motion model. Another method to add the motion is by applying a machine learning network to the coronary lumen segmentation, for example Gu et al, "Fusing 2D and 3D convolutional neural networks for segmentation of aorta and coronary arteries from CT images", Elsevier, Artificial Intelligence in Medicine 121. 2021;102189. Using this motion model, we can deform the centerline extraction (202), lumen segmentation (203) and plaque segmentation (204) and create a multiphase visualization parameter (205). As we don't have a multiphase CCTA dataset, we create the time-resolved simulated angiographic view based on the method as described in US patent 10,192,352 *"Method, device and system for simulated shadow images"*, using the deformed coronary lumen segmentation.

The present disclosure mainly describes the objects of interest as the heart. The skilled person would appreciate that this teaching can be equally extended to other objects. Furthermore, the present disclosure refers to CT image dataset. The skilled person would appreciate that this teaching can be equally extended to other imaging modalities, for instance rotational angiography, MRI, SPECT, PET, 3D Ultrasound, or the like.

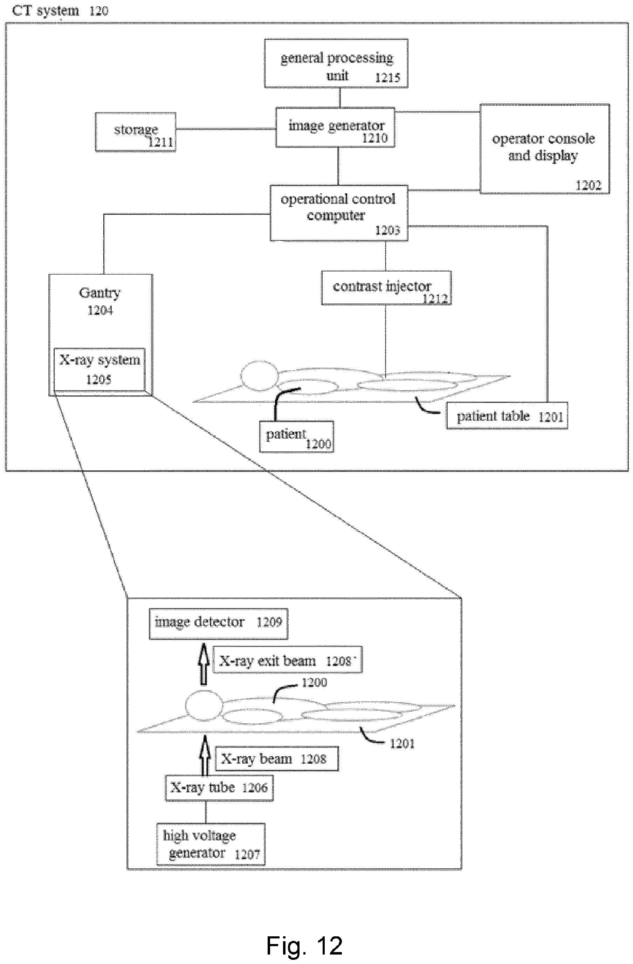

The embodiments disclosed herein can be used on a standalone system or included directly in, for instance, a computed tomography (CT) system and/or a X-ray system. Fig. 12 illustrates an example of a high-level block diagram of a computed tomography (CT) system which may be adapted for the purpose.

Portions of the system (as defined by various functional blocks) may be implemented with dedicated hardware, analog and / or digital circuitry, and / or one or more processors operating program instructions stored in memory.

The most common form of computed tomography is X-ray CT, but many other types of CT exist, such as dual-energy, spectral multi-energy or photon-counting CT. Also, positron emission tomography (PET) and single-photon emission computed tomography (SPECT).

Fig. 12 describes an exemplary X-ray CT. In an X-ray CT, an X-ray system moves around a patient in a gantry and obtains images. Through use of digital processing a three-dimensional image is constructed from a large series of two-dimensional angiographic images taken around a single axis of rotation.

For a typical X-ray CT 120 an operator positions a patient 1200 on the patient table 1201 and provides input for the scan using an operating console 1202. The operating console 1202 typically consists of a computer, a keyboard / foot paddle / touchscreen and one or multiple monitors.

An operational control computer 1203 uses the operator console input to instruct the gantry 1204 to rotate but also sends instructions to the patient table 1201 and the X-ray system 1205 to perform a scan.

Using a selected scanning protocol selected in the operator console 1202, the operational control computer 1203 sends a series of commands to the gantry 1204, the patient table 1201 and the X-ray system 1205. The gantry 1204 then reaches and maintains a constant rotational speed during the entire scan. The patient table 1201 reaches the desired starting location and maintains a constant speed during the entire scan process.

The X-ray system 1205 includes an X-ray tube 1206 with a high voltage generator 1207 that generates an X-ray beam 1208.

The high voltage generator 1207 controls and delivers power to the X-ray tube 1206. The high voltage generator 1207 applies a high voltage across the vacuum gap between the cathode and the rotating anode of the X-ray tube 1206.

Due to the voltage applied to the X-ray tube 1206, electron transfer occurs from the cathode to the anode of the X-ray tube 1206 resulting in X-ray photon generating effect also called Bremsstrahlung. The generated photons form an X-ray beam 1208 directed to the image detector 1209.

An X-ray beam 1208 consists of photons with a spectrum of energies that range up to a maximum determined by among others the voltage and current submitted to the X-ray tube 1206.

The X-ray beam 1208 then passes through the patient 1200 that lies on a moving table 1201. The X-ray photons of the X-ray beam 1208 penetrate the tissue of the patient to a varying degree. Different structures in the patient 1200 absorb different fractions of the radiation, modulating the beam intensity.

The modulated X-ray beam 1208' that exits from the patient 1200 is detected by the image detector 1209 that is located opposite of the X-ray tube.

This image detector 1209 can either be an indirect or a direct detection system.

In case of an indirect detection system, the image detector 1209 consists of a vacuum tube (the X-ray image intensifier) that converts the X-ray exit beam 1208' into an amplified visible light image. This amplified visible light image is then transmitted to a visible light image receptor such as a digital video camera for image display and recording. This results in a digital image signal.

In case of a direct detection system, the image detector 1209 consists of a flat panel detector. The flat panel detector directly converts the X-ray exit beam 1208' into a digital image signal.

The digital image signal resulting from the image detector 1209 is passed to the image generator 1210 for processing. Typically, the image generation system contains high-speed computers and digital signal processing chips. The acquired data are preprocessed and enhanced before they are sent to the display device 1202 for operator viewing and to the data storage device 1211 for archiving.

In the gantry the X-ray system is positioned in such a manner that the patient 1200 and the moving table 1201 lie between the X-ray tube 1206 and the image detector 1209.

In contrast enhanced CT scans, the injection of contrast agent must be synchronized with the scan. The contrast injector 1212 is controlled by the operational control computer 1203.

An embodiment of the present application is implemented by the X-ray CT system 120 of Fig. 12 as follows. A clinician or other user acquires a CT scan of a patient 1200 by selecting a scanning protocol using the operator console 1202. The patient 1200 lies on the adjustable table 1201 that moves at a continuous speed during the entire scan controlled by the operational control computer 1203. The gantry 1204 maintains a constant rotational speed during the entire scan

Multiple two-dimensional X-ray images are then generated using the high voltage generator 1207, the X-ray tube 1206, the image detector 1209 and the digital image generator 1210 as described above. This image is then stored on the hard drive 1211. Using these X-ray images, a three-dimensional image is constructed by the image generator 1210.

The general processing unit 1215 uses the three-dimensional image to perform workflow as described by Fig. 2.

There have been described and illustrated herein several embodiments of a method and apparatus for restoring missing information regarding the order and the flow direction of the velocity components. While particular embodiments of the invention have been described, it is not intended that the invention be limited thereto, as it is intended that the invention be as broad in scope as the art will allow and that the specification be read likewise. For example, the data processing operations can be performed offline on images stored in digital storage, such as a PACS commonly used in the medical imaging arts. It will therefore be appreciated by those skilled in the art that yet other modifications could be made to the provided invention without deviating from its spirit and scope as claimed.

The embodiments described herein may include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers or other network devices may be stored locally and/or remotely, as appropriate. Where a system includes computerized devices, each device can include hardware elements that may be electrically coupled via a bus, the elements including, for example, at least one central processing unit ("CPU" or "processor"), at least one input device (e.g., a mouse, keyboard, controller, touch screen or keypad) and at least one output device (e.g., a display device, printer or speaker). Such a system may also include one or more storage devices, such as disk drives, optical storage devices and solid-state storage devices such as random access memory ("RAM") or read-only memory ("ROM"), as well as removable media devices, memory cards, flash cards, etc.

Such devices also can include a computer-readable storage media reader, a communications device (e.g., a modem, a network card (wireless or wired), an infrared communication device, etc.) and working memory as described above. The computer-readable storage media reader can be connected with, or configured to receive, a computer-readable storage medium, representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs, such as a client application or web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Various embodiments may further include receiving, sending, or storing instructions and/or data implemented in accordance with the foregoing description upon a computer-readable medium. Storage media and computer readable media for containing code, or portions of code, can include any appropriate media known or used in the art, including storage media and communication media, such as, but not limited to, volatile and non-volatile, removable and non-removable media implemented in any method or technology for storage and/or transmission of information such as computer readable instructions, data structures, program modules or other data, including RAM, ROM, Electrically Erasable Programmable Read-Only Memory ("EEPROM"), flash memory or other memory technology, Compact Disc Read-Only Memory ("CD-ROM"), digital versatile disk (DVD) or other optical storage, magnetic cassettes, magnetic tape, magnetic disk storage or other magnetic storage devices or any other medium which can be used to store the desired information and which can be accessed by the system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the broader spirit and scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the invention to the specific form or forms disclosed, but on the contrary, the intention is to cover all modifications, alternative constructions and equivalents falling within the spirit and scope of the invention, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including" and "containing" are to be construed as openended terms (i.e., meaning "including, but not limited to,") unless otherwise noted. The term "connected," when unmodified and referring to physical connections, is to be construed as partly or wholly contained within, attached to or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Operations of processes described herein can be performed in any suitable order unless otherwise indicated herein or otherwise clearly contradicted by context. Processes described herein (or variations and/or combinations thereof) may be performed under the control of one or more computer systems configured with executable instructions and may be implemented as code (e.g., executable instructions, one or more computer programs or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory.

Preferred embodiments of this disclosure are described herein, including the best mode known to the inventors for carrying out the invention. Variations of those preferred embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

All references, including publications, patent applications and patents, cited herein are hereby incorporated by reference to the same extent as if each reference were individually and specifically indicated to be incorporated by reference and were set forth in its entirety herein.

**Claims**

1. A method of optimizing workflow for a vascular intervention based on a three-dimensional dataset of a vessel, particularly a coronary artery, acquired from a 3D imaging modality, comprising:

   a) determining vessel centerline;
   b) performing segmentation in the dataset to identify the vessel lumen;
   c) performing plaque segmentation in the dataset to identifying the plaque in the vessel wall;
   d) defining a parameter related to the plaque severity in the vessel wall;
   e) creating a two-dimensional presentation image spanning the length of the segmented vessel to illustrate both the plaque severity parameter and its spatial distribution in relation to the vessel wall circumference using the position of points along the centerline in the segmented vessel as primary axis.

2. Method according to claim 1, further comprising creating an MPR image along the vessel centerline using the dataset and displaying the MPR image with the same primary axis of the two-dimensional presentation image.

3. Method according to claim 1 or 2, wherein step e) comprises:

   i) determining cross-sectional planes to the vessel through a number of points of the centerline;
   ii) on each cross-sectional plane identifying a vector having origin from the corresponding centerline point and radial orientation towards the vessel wall at a certain angle;
   iii) calculating the parameter for each angle of the vector spanning from 0° to 360° with a certain step;
   iv) showing the parameter as a function of the angle and the position of the corresponding centerline point along the centerline.

4. Method according to claim 3, further comprising:

   defining at least one scale of values between a minimum and a maximum for the parameter with the maximum value being associated to the highest plaque thickness or lumen obstruction severity and the minimum to the lowest plaque thickness or lumen obstruction severity or viceversa;
   associating a value to such parameter on such a scale for each angle on each cross-sectional plane to represent plaque thickness and/or lumen obstruction severity.

5. Method according to claim 3 or 4, wherein the plaque thickness is calculated for each angular position of the vector by determining the Euclidean distance between corresponding first (705) and last (706) segmentation voxels intersecting the vector and/or by counting the plaque segmented voxels (n) in a plaque segmentation mask stack (703) obtained resampling segmented plaque along the vector and multiplying the result by the resampled stack pixel dimension (v).

6. Method according to any preceding claim, further comprising performing a healthy vessel reconstruction to determine the healthy lumen contour, the lumen obstruction being calculated by determining the ratio or the distance between the detected lumen contour (804) and the healthy reconstructed lumen contour (803) for each angular position of the vector (805).

7. Method according to any preceding claim, further comprising allowing the user to select a specific centerline point and showing, with or without overlay, a cross section image of the vessel in correspondence of such centerline point together with the two-bidimensional presentation image.

8. Method according to any preceding claim, further comprising creating a vessel characteristic graph displaying a vessel characteristic parameter along the centerline in the segmented vessel, wherein the vessel characteristic is a parameter selected from the group consisting in: vessel curvature, lumen area, lumen diameter, calcified arc, calcified plaque index, calcium volume index, risk of stent under expansion such as, for example, calcium deposit in a lesion with maximum calcium arc greater than 180°, maximum plaque thickness greater than 0.5 mm, plaque length along vessel centerline greater than 5 mm.

9. Method according to any preceding claim, further comprising constructing a simulated 2D angiographic image from the three-dimensional dataset and enhancing such image by mapping plaque thickness or lumen obstruction to the vessel contour outlines with a colormap.

10. Method according to any preceding claim, further comprising presenting a time-resolved simulated angiographic view with or without overlay of one or more plaque severity parameters to provide guidance before a percutaneous coronary intervention.

11. Method according to any preceding claim, wherein the dataset is a multiphase CCTA dataset, the method further comprising performing the method steps on each phase of the multiphase CCTA image dataset to obtain a multiphase visualization parameter (205), including a multiphase centerline, lumen and plaque segmentation and creating a time-resolved simulated angiographic view.

12. Method according to any preceding claim, wherein the dataset is a single phase CCTA, the method comprising using or computing a motion model, deforming the centerline extraction (202), lumen segmentation (203) and plaque segmentation (204) according to the motion model to create a multiphase visualization parameter (205).

13. A non-transitory computer readable medium, having stored thereon, instructions, which when executed by a computing device, cause the computing device to perform the method according to any preceding claim.

14. An apparatus for acquiring a three-dimensional image data set of a patient, the apparatus comprising a data processing module configured to perform the method according to any preceding claim 1 to 12 to assess plaque severity in a vessel, particularly a coronary artery,

15. A system comprising:

   memory to store program instructions;
   a display;

a processor that, when executing the program instructions, is configured to:

acquire or obtain from a repository a three-dimensional dataset of a vessel, particularly a coronary artery;
determine vessel centerline;
perform segmentation in the dataset to identify the vessel lumen;
perform plaque segmentation in the dataset to identifying the plaque in the vessel wall;
define a parameter related to the plaque severity in the vessel wall;
create a two-dimensional presentation image spanning the length of the segment vessel to illustrate both the plaque severity parameter and its spatial distribution in relation to the vessel wall circumference using the position of points along the centerline in the segmented vessel as primary axis;
display the two-dimensional presentation image on the display.

Normal coronary artery

Atherosclerosis

Atherosclerotic plaque

Fig. 1

Retrieve patient specific
CCTA image data
**201**

Determine coronary
centerline
**202**

Determine coronary
lumen
**203**

Determine plaque
**204**

Visualize parameters
**205**

Optionally step, Time-
resolved visualization of
parameters
**206**

Fig. 2

312

314

316

Fig. 3

402

406          401

Fig. 4a

404

408a

Fig. 4d

403

404

Fig. 4b

408b

406     Fig. 4c     405

404

Fig. 4e

Fig. 5

Fig. 6

Pa, 705

Pb, 706

704

703

702

701

Image vector        Plaque mask

Fig. 7

Fig. 8

901

Fig. 9

Fig. 10

Fig. 11

CT system 120

general processing unit 1215

image generator 1210

storage 1211

operator console and display 1202

operational control computer 1203

Gantry 1204

X-ray system 1205

contrast injector 1212

patient table 1201

patient 1200

image detector 1209

X-ray exit beam 1208'

1200

1201

X-ray beam 1208

X-ray tube 1206

high voltage generator 1207

Fig. 12

Fig. 13

1402

1401

1403

Fig. 14

Fig. 15

Fig. 16

Europäisches
Patentamt

European
Patent Office

Office européen
des brevets

# EUROPEAN SEARCH REPORT

**Application Number**

EP 24 16 8226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIROTO KOKUBUN ET AL: "Radial intensity projection for lumen: application to CT angiographic imaging", MEDICAL IMAGING 2006: PHYSICS OF MEDICAL IMAGING, vol. 6142, 61424R, 2006, pages 1-8, XP040220332, SPIE, PO BOX 10 BELLINGHAM WA 98227-0010 USA DOI: 10.1117/12.651498 | 1-5,9-15 | INV. G06T11/20 G06T7/00 |
| Y | * abstract * * sections 1, 2.1, 2.2, 3.1; figures 3,4,6-8 * | 6-8 | |
| Y,D | US 9 008 386 B2 (VERSTRAETEN LUC [BE]; SVAROVSKY JAN [GB] ET AL.) 14 April 2015 (2015-04-14) * abstract * * column 9, line 55ff; figures 4,6 * * column 10, line 54ff * | 6-8 | |

TECHNICAL FIELDS SEARCHED (IPC)

G06T

The present search report has been drawn up for all claims

| Place of search | Date of completion of the search | Examiner |
|---|---|---|
| Munich | 6 September 2024 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8226

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | | Publication date | Patent family member(s) | | Publication date |
|---|---|---|---|---|---|
| US 9008386 | B2 | 14-04-2015 | EP | 2489011 A2 | 22-08-2012 |
| | | | US | 2012207365 A1 | 16-08-2012 |
| | | | US | 2015213602 A1 | 30-07-2015 |
| | | | WO | 2011046425 A2 | 21-04-2011 |

EPO FORM P0459

For more details about this annex : see Official Journal of the European Patent Office, No. 12/82

## REFERENCES CITED IN THE DESCRIPTION

**Patent documents cited in the description**

- US 10229516 B
- US 11707242 B
- US 10699407 B
- US 206536
- US 9008386 B
- US 10192352 B
- EP 3128481 B1, Aben


**Non-patent literature cited in the description**

- **KNUUTI et al.** 2019 ESC Guidelines for the diagnosis and management of chronic coronary syndromes. *European Society of Cardiology (ESC)*
- *European Heart Journal*, 2020, vol. 41, 407477
- **METZ et al.** Semi-automatic coronary artery centerline extraction in computed tomography angiography data. *IEEE International Symposium on Biomedical Imaging: from nano to macro*, May 2007
- **METZ et al.** Coronary centerline extraction from CT coronary angiographic images using a minimum cost path approach. *Med Phys.*, December 2009, vol. 36 (12), 5568-79
- **WOLTERINK et al.** Coronary artery centerline extraction in cardiac CT angiography using a CNN-based orientation classifier. *Med Image Anal.*, January 2019, vol. 51, 46-60
- **AUSTEN et al.** A reporting system on patients evaluated for coronary artery disease. Report of the Ad Hoc Committee for Grading of Coronary Artery Disease, Council on Cardiovascular Surgery, American Heart Association. *Circulation*, 1975, vol. 51, 5-40
- **HAMPE et al.** Graph neural networks for automatic extraction and labelling of the coronary artery tree in CT angiography. *Computers in Biology and Medicine*, 2023
- **SCHAAP et al.** Coronary Lumen Segmentation Using Graph Cuts and Robust Kernel Regression. *Lecture Notes in Computer Science*, vol. 5636, 528-539
- **WOLTERINK et al.** Graph Convolutional Networks for Coronary Artery Segmentation in Cardiac CT Angiography. *GLMI@MICCAI*, 2019
- **GHARLEGHI et al.** Automated segmentation of normal and diseased coronary arteries - The ASOCA challenge. *Computerized medical imaging and graphics: the official journal of the Computerized Medical Imaging Society*, 2022, vol. 97
- **ZAIR et al.** An automated segmentation of coronary artery calcification using deep learning in specific region limitation. *Med Biol Eng Comput*, 2023, vol. 61, 1687-1696
- Fast medial axis extraction on tubular large 3D data by randomized erosion. **ZWETTLER et al.** VISI-GRAPP 2008. CCIS, 2009, vol. 24, 97-108
- **HUDA et al.** Technique factors and image quality as functions of patient weight at abdominal CT. *Radiology*, 2000, vol. 217 (2), 430-5
- **RYBICKI et al.** Patterns of Opacification in Coronary CT Angiography: Contrast Differences and Gradients. *Current cardiovascular imaging reports*, 2014, vol. 7 (10)
- **CHENG et al.** Automated 3-dimensional quantification of noncalcified and calcified coronary plaque from coronary CT angiography. *Journal of cardiovascular computed tomography*, 2009, vol. 3 (6), 372-382
- **MYLONAS et al.** Quantifying coronary artery calcification from a contrast-enhanced cardiac computed tomography angiography study. *European Heart Journal - Cardiovascular Imaging*, 2014, vol. 15, 210-215
- **PARODI et al.** Patient-specific prediction of coronary plaque growth from CTA angiography: a multiscale model for plaque formation and progression. *IEEE Transactions on Information Technology in Biomedicine*, 2012, vol. 16 (5), 952-965
- **MOTOYAMA et al.** Atherosclerotic plaque characterization by 0.5-mm-slice multislice computed tomographic imaging comparison with intravascular ultrasound. *Circulation Journal*, 2007, vol. 71 (3), 363-366
- **YANG et al.** Automatic coronary calcium scoring using noncontrast and contrast CT images. *Med. Phys.*, 2016, vol. 43 (5), 2174-2186

- **FUJINO A et al.** Predictors of calcium fracture derived from balloon angioplasty and its effect on stent expansion assessed by optical coherence tomography. *JACC Cardiovasc Interv.*, 2018, vol. 11, 1015-1017
- **ALI ZA et al.** Optical Coherence Tomography Characterization of Coronary Lithoplasty for Treatment of Calcified Lesions: First Description. *JACC Cardiovasc Imaging.*, 2017, vol. 10 (8), 897-906

- **FUJINO et al.** A new optical coherence tomography-based calcium scoring system to predict stent underexpansion. *EuroIntervention.*, 06 April 2018, vol. 13 (18), e2182-e2189
- **BAKA et al.** Statistical coronary motion models for 2D + t/3D registration of X-ray coronary angiography and CTA. *Medical Image Analysis*, 2013, vol. 17, 698-709
- Fusing 2D and 3D convolutional neural networks for segmentation of aorta and coronary arteries from CT images. **GU et al.** Artificial Intelligence in Medicine. Elsevier, 2021, vol. 121, 102189